(19) Europäisches Patentamt
European Patent Office
Office européen des brevets

(11) EP 0 522 675 B1

(12) EUROPÄISCHE PATENTSCHRIFT

(45) Veröffentlichungstag und Bekanntmachung des Hinweises auf die Patenterteilung:
**22.08.2001 Patentblatt 2001/34**

(51) Int Cl.[7]: **C08F 293/00**, C08F 4/04, C08G 18/38

(21) Anmeldenummer: **92250186.1**

(22) Anmeldetag: **13.07.1992**

# (54) Verfahren zur Herstellung von wässrigen Block-Copolymer-Emulsionen und deren Verwendung

Process for the preparation of aqueous emulsions of block-copolymers and their use

Procédé de préparation d'émulsions aqueuses de polymères séquencés et leur utilisation

(84) Benannte Vertragsstaaten:
**DE FR GB NL**

(30) Priorität: **11.07.1991 DE 4123223**

(43) Veröffentlichungstag der Anmeldung:
**13.01.1993 Patentblatt 1993/02**

(73) Patentinhaber: **DAINIPPON INK AND CHEMICALS, INC.**
**Itabashi-ku, Tokyo 174-8520 (JP)**

(72) Erfinder:
- **Frings, Rainer B.**
  **W-1000 Berlin 41 (DE)**
- **Komazaki, Shigeru**
  **Izumiootsu-shi, Osaka (JP)**
- **Grahe, Gerwald F.**
  **W-1000 Berlin 33 (JP)**

(74) Vertreter: **Maikowski, Michael, Dipl.-Ing. Dr.**
**Patentanwälte**
**Maikowski & Ninnemann**
**Kurfürstendamm 54-55**
**10707 Berlin (DE)**

(56) Entgegenhaltungen:
**EP-A- 0 413 459** **DE-A- 1 803 339**
**US-A- 3 909 497**

Bemerkungen:
Die Akte enthält technische Angaben, die nach dem Eingang der Anmeldung eingereicht wurden und die nicht in dieser Patentschrift enthalten sind.

EP 0 522 675 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft ein Verfahren zur Herstellung von wäßrigen Block-Copolymer-Emulsionen und deren Verwendung.

Polymere werden aus Monomeren oder auch aus anderen Polymeren durch geeignete Umsetzungen hergestellt. Bei diesen sogenannten Polyreaktionen unterscheidet man nach IUPAC zwischen der Polymerisation und der Polykondensation. Die Polykondensation ist durch einen wiederholten Kondensationsprozeß, in dessen Verlauf einfachere Moleküle abgespalten werden, charakterisiert. Nach diesem Prozeß werden zum Beispiel viele Polyamide aus Diaminen und Dicarbonsäuren unter Abspaltung von Wasser hergestellt.

Bei der Polymerisation dagegen erfolgt eine fortlaufende Addition von Molekülen aneinander, ohne gleichzeitig ein anderes Molekül abzuspalten. Ausgelöst werden diese Reaktionen im allgemeinen durch sogenannte Polymerisationsinitiatoren, die anionischer, kationischer oder radikalischer Natur sein können.

Obwohl die Art der Monomere eine entscheidende Bedeutung für die Wahl des Initiators besitzt, wird doch, wenn möglich, der radikalischen Polymerisation der Vorzug gegeben.

Auch die Herstellung von Block-Copolymeren erfolgt über radikalische Polymerisation. Einen Überblick über die verschiedenen Synthesemethoden gibt zum Beispiel "Encyclopedia of Engeneering Materials, Part A, Polymer Science and Technology, Volume 1, Part 4, Synthesis and Characterization of Block-Copolymers" (Marcel Dekker Inc. 1988). Von den zahlreichen Einzelarbeiten seien besonders die von J.Furukawa (Angew. Makrom. Chem. 1 (1967), 92), S.Nagai (J. Polym. Sci., Part A 24 (1986),405), J. Piirma (J. Appl. Polym. Sci. 26 (1981),3103), sowie von B. Hazer (Angew. Makrom. Chem. 129 (1985),31) erwähnt.

Die nach den beschriebenen Methoden erzeugten Block-Copolymere, insbesonders jene auf Basis von Urethan- und Acrylpolymeren, besitzen herausragende anwendungstechnische Eigenschaften. Bevorzugte Einsatzgebiete sind daher Oberflächenbeschichtungen und Lacke (siehe japanische Offenlegungsschrift Tokkai-Hei-3-74420)

Problematisch bei der Herstellung und Anwendung von Block-Copolymeren ist allerdings die Verwendung von nicht-wäßrigen Lösungsmittelsystemen, die hinsichtlich des Umwelt- und Arbeitsschutzes als problematisch einzuschätzen sind. Aus diesem Grund geht der gegenwärtige Trend hin zum Einsatz wäßriger Polymerdispersionen bzw. -emulsionen.

Allerdings wurden bis jetzt nur sehr wenige Synthesemethoden für Block-Copolymere in wäßrigen Dispersionen entwikkelt. So beschreibt D. Mikulasova (Makrom. Chem. 175 (1974),2091) eine Methode zur Synthese von Vinyl- und Vinyl-Block-Copolymeren in Emulsion mit langlebigen Radikalen. Ebenso beschreibt I. Piirma (J. Appl. Polym. Sci. 33 (1987),727) eine Synthese von Vinyl- und Vinyl-Block-Copolymeren in einer zweistufigen Radikalpolymerisation mit Azound Peroxoradikalstartern. Block-Copolymere aus Polyvinylchlorid und Polyethylenoxid wurden von J.J. Laverty (J. Polym. Sci., Polym. Chem. Ed. 15 (1977),2001) und von S. Nagai (Chemistry Express 1 (9), (1986), 543) unter Verwendung von Polyethylenoxid mit Azogruppen synthetisiert. G. Smets (J. Polym. Sci., Polym. Chem. Ed. 16 (1978),3077) verwendet zur Synthese von Block-Copolymeren polymere Peroxide als Initiatoren. Erwähnt sei in diesem Zusammenhang auch eine Emulsionspolymerisation, bei der oberflächenaktive polymere Azoinitiatoren als Emulgatoren dienen (W. Heitz (Makrom. Chem. Rap. Commun. 2 (1981), 83)).

Die DD-Patentschrift 235 651 beschreibt die Herstellung von speziellen Azo-Initiatoren. Die beanspruchten Azo-Initiatoren lassen sich nur mit der technisch schwierig zu beherrschenden anionischen Polymerisation herstellen. Die Verwendung der erhaltenen Makro-Azo-Initiatoren zur Herstellung von wässrigen Block-Copolymer-Systemen wird nicht beschrieben.

Auch nach der Lehre der EP-Patentschrift 413 459 lassen sich nur bestimmte Block-Copolymer-Systeme herstellen. Durch die radikalische Polymerisation dieses Verfahrens lassen sich z.B. Block-Copolymere aus PMMA/Polybutadien bzw. Block-Copolymere aus Polybutadien/Styrol bzw. Styrol/(Meth)Acrylat-Gemischen nicht in homogener organischer Lösung herstellen, da es während der Polymerisation des zweiten Blocks mit dem homogen gelösten Polybutadien-Makro-Azo-Initiator zur Gelbildung durch Angriff von Vinylpolymer-Makro-Radikalen an Doppelbindungen des Polybutadienblocks kommt.

Die Emulsions-Block-Copolymere gewinnen auf dem Gebiet der Oberflächenbeschichtungen, insbesonders als Lacke, eine immer größer werdende Bedeutung, wie dies zum Beispiel JP TOKKAI-HEI-1-254780, welches die Verwendung von Block-Copolymeren aus Polyethylenglykolen und Polyacrylaten als Lacke beschreibt, deutlich hervorgeht.

Dem stark gestiegenen Interesse an Emulsions-Block-Copolymeren kann aber derzeit, wie aus dem bekannten Stand der Technik hervorgeht, noch nicht in befriedigender Weise Rechnung getragen werden, da die Herstellung eine schwierige und aufwendige Verfahrensführung erfordert.

Ziel der Erfindung ist die Entwicklung eines einfachen Verfahrens zur Herstellung von wäßrigen Block-Copolymer-Emulsionen unter Verwendung von Azo-Makro-Initiatoren, die durch Umsetzung eines Präpolymers mit Diisocyanaten und einem thermisch zersetzbaren Azoinitiator erhalten werden.

Erfindungsgemäß werden wäßrige Block-Copolymer-Emulsionen erhalten, indem ein Azo-Makro-Initiator in

der Gesamt oder Teilmenge eines Vinylmonomeren oder eines Vinylmonomerengemisches, unter Umständen mit Hilfe eines wasserunlöslichen Lösungsmittels, gelöst wird, wobei das Gesamtverhältnis von Azo-Makro-Initiator zu Vinyl monomeren zwischen 2:98 und 95:5, vorzugsweise zwischen 5:95 bis 50:50 Gewichtsteilen, liegt und diese Mischung mit Hilfe von weniger als 10 Gew.-% eines anionischen, kationischen oder nicht ionogenen Emulgators oder eines Gemisches verschiedener Emulgatoren und ggf. zusätzlich mittels bekannter Dispergierhilfsmittel in Wasser emulgiert wird und diese Emulsion bei Temperaturen zwischen 65 °C und 95 °C unter Rühren polymerisiert wird, wobei währenddessen der Rest des bzw. der Vinylpolymeren zugetropft wird, sodaß nach vollständiger Umsetzung der Azo-Gruppen und des Vinylmonomeren eine stabile wässrige Emulsion eines Block-Copolymeren mit einem Festkörpergehalt zwischen 10 und 80 Gew.-%, vorzugsweise zwischen 20 und 50 Gew.-% erhalten wird. Es kann auch mehr als ein Azo-Makro-Initiator eingesetzt werden.

Niedrigere Polymerisationstemperaturen als 65 - 95 °C setzen die Reaktionsgeschwindigkeit merklich herab, höhere Temperaturen zersetzen die Micellen der Emulsion.

Der Azo-Makro-Initiator wird erhalten durch Umsetzung der Verbindungen der allgemeinen Formel I

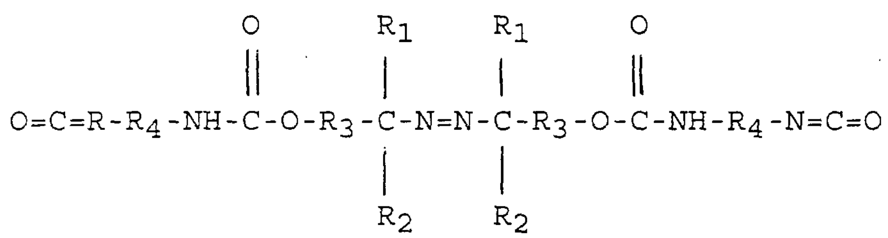

I

wobei

$R_1$ $-CH_3$

$R_2$ $-CN$; $-CH_3$

R3 $-CONHCH_2CH_2$; $-(CH_2)_{1-2}-$; $-CONHC(RR')CH_2-$ mit R,R' = $-CH_3$ $-CH_2OH$
und

$R_4$ lineare oder verzweigte aliphatische, cycloaliphatische, aromatische oder araliphatische Reste mit 2-100 Kohlenstoffatomen,

bedeuten, mit einem Präpolymeren mit mindestens zwei isocyanatreaktiven terminalen Gruppen, wie z.B. Hydroxyl-, Thiol-, Amino-oder Säuregruppen, wobei die Präpolymeren aus der Reihe der Polyurethane, Polyacrylate bzw. -methacrylate, Polyester, Polybutadiene, Aminopropyldimethylpolydimethylsiloxane, Polydimethylsiloxancarbinole, Polyether, Polyepoxide, Polylactone, Polycarbonate und Polyamide stammen, deren Molekulargewicht zwischen 400 und 20.000 g/mol liegt, in einem wasser löslichen Lösungsmittel und in geeigneten stöchiometrischen Verhältnissen zueinander bei Temperaturen zwischen 0 °C und 60 °C. Der Azo-Makro-Initiator weist mindestens eine die Polymerisation initiierende Azogruppe auf und besitzt ein Molekulargewicht zwischen 1.500 und 60.000 g/mol, vorzugsweise 2.000 bis 45.000 g/mol.

Liegt das Molekulargewicht unter 1.500 g/mol, ist der Gehalt an Azo-Gruppen im Polymer zu niedrig und der Umsatz der Monomere wird zu gering. Liegt dagegen das Molekulargewicht über 60.000 g/mol, nimmt die Löslichkeit des Azo-Makro-Initiators im Lösungsmittel, sowie in den Monomeren drastisch ab.

Zur Herstellung einer Verbindung der allgemeinen Formel I werden OH-funktionelle Azo-Initiatoren der allgemeinen Formel II

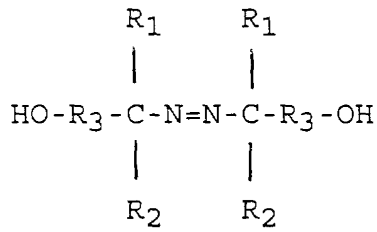

(II)

wobei $R_1$, $R_2$ und $R_3$ die gleichen Bedeutungen wie in Formel I haben, in aromatischen, ketomischen estergruppen- oder stickstoffhaltigen lösungsmitteln insbesondere solchen die mit Wasser ein niedrig siedendes Azeotrop bilden , sowie auch in radikalisch polymerisierbaren monomeren mit einer Lösung eines Diisocyanates der allgemeinen Formel III umgesetzt,

$$O=C=N-R_4-N=C=O \qquad (III)$$

wobei $R_4$ dieselbe Bedeutung wie in Formel I hat.

Als Azoverbindungen , die über eine Azogruppe sowie über zwei Hydroxylgruppen verfügen müssen, eignen sich 2,2'-Azobis(2-methyl-N-(2-hydroxyethyl)-propionamid) und 2,2'-Azobis(2-(hydroxymethyl)-propionitril).

Als Diisocyanate sind geeignet Isophorondiisocyanat, Hexamethylendiisocyanat, 2,2,4-Trimethylhexamethylendiisocyanat, Toluylendiisocyanat, Xylylendiisocyanat, Diphenylmethandiisocyanat, 1,3-Bis-(diisocyanatomethyl)-cyclohexan, Tetramethylendiisocyanat, Trimethylcyclohexyldiisocyanat, Methylcyclohexan-2,4-diisocyanat, Methylcyclohexan-2,6-diisocyanat und 4,4-Methylenbis-(cyclohexylisocyanat).

Geeignete Lösungsmittel für die Herstellung der niedermolekularen Azoinitiatoren der Formel I und der Azo-Makro-Initiatoren sind Aromaten, wie z.B. Toluol und Xylol. Ebenso geeignet sind Ketone wie Aceton, 2-Butanon, Methylisobutylketon und Cyclohexanon. Darüber hinaus eignen sich auch Ester wie Essigsäuremethylester und Essigsäureethylester, ebenso stickstoffhaltige Lösungsmittel wie zum Beispiel N-Methylpyrrolidon oder N,N-Dimethylformamid, sowie auch radikalisch polymerisierbare Monomere.

Gegebenenfalls können zur Beschleunigung der Umsetzung zur Herstellung der Makro-Azoverbindungen Katalysatoren zugegeben werden. Als Katalysatoren kann man Zinnverbindungen wie Dibutylzinnlaurat und Amine wie DABCO (1,4-Diazabicyclo-[2.2.2] - octan) und DBU (1,8-Diazabicyclo[5.4.0.]undec-7-en) und deren Gemische in typischen Konzentrationen von 0,05 bis 2,0 Gewichtsprozenten bezogen auf die reaktiven Bestandteile einsetzen.

Zur Herstellung wäßriger Block-Copolymer-Emulsionen wird, wie schon ausgeführt, zuerst eine Lösung des Azo-Makro-Initiators in Vinylmonomeren in Wasser unter Zugabe von Dispergierhilfsmitteln, wie Emulgatoren oder Schutzkolloiden, emulgiert. Die Lösung des Azo-Makro-Initiators im Vinylmonomeren kann zusätzlich auch ein Lösungsmittel enthalten, welches mit Wasser nicht mischbar sein sollte. Aber auch geringe Mengen eines wasserlöslichen Lösungsmittels führen noch nicht zu nennenswerten Störungen.

Die Emulgatoren können sowohl anionisch, kationisch und nichtionogen sein. Besonders geeignet sind Natriumdodecylbenzolsulfonat, Nonylphenylpolyethersulfat, Polyoxyethylenlaurylether, Polyoxyethylenlaurylphenylether, Polyoxyethylen-Polyoxypropylen-Block-Copolymere, Cetyltrimethylammoniumbromid und Laurylpyridiniumchlorid. Die gleichzeitige Verwendung von zwei oder mehreren Emulgatoren ist möglich.

Als Dispergierhilfsmittel eignen sich wäßrige Oligomere und wasserlösliche Polymere wie Polyvinylalkohol oder Hydroxyethylcellulose. Die Dispergierhilfsmittel können mit den Emulgatoren zusammen verwendet werden.

Die Menge der eingesetzten Emulgatoren und Dispergierhilfsmittel sollte unter 10%, vorzugsweise unter 5% bezogen auf die Gesamtmenge an Azo-Makro-Initiator und Monomer liegen.

Als Vinylmonomere eignen sich Monomere auf Acrylat- und Methacrylatbasis wie Methyl(meth)acrylat, Ethyl (meth)acrylat, Butyl(meth)acrylat, 2-Ethylhexyl(meth)acrylat, Lauryl(-meth)acrylat, Stearyl(meth)acrylat, Cyclohexyl-(meth)acrylat und Benzyl(meth)acrylat. Ebenso geeignet sind aromatische Monomere wie Styrol, -Methylstyrol und Vinyltoluol. Verwendet werden können auch Monomere mit Amidgruppen wie (Meth)acrylamid und N-Methoxymethyl (meth)acrylamid, aliphatische Vinylmonomere wie aliphatische Vinylester, Vinylmonomere mit Hydroxygruppen wie Hydroxyethyl(meth)acrylat, Hydroxypropyl-(meth)acrylat und Hydroxybutyl(meth)acrylat, Monomere mit Nitrilgruppen wie (Meth)acrylnitril, Vinylmonomere mit Epoxidgruppen wie Glycidyl(meth)acrylat, Methylglycidyl-(meth)acrylat, Vinyldiester wie Maleinsäureester und Fumarsäureester, bei denen die Carbonsäurefunktion mit einem C1-C18-Alkohol verestert wurde, halogenhaltige Monomere wie Tetrafluorethylen und Hexafluorpropylen und auch Vinylmonomere mit Säurefunktionen wie (Meth)acrylsäure, Crotonsäure, Maleinsäure, Fumarsäure und Itaconsäure.

Als Initiatoren können gegebenenfalls neben den oben genannten Azo-Makro-Initiatoren auch zusätzlich andere Azound/oder Peroxoverbindungen eingesetzt werden.

Zur Regulierung des Molekulargewichts dienen kettenabbrechende Substanzen wie Phenole und Allylverbindungen.

Präpolymere zur Herstellung von Azo-Makro-Initiatoren sind in allen gewünschten Zusammensetzungen und Molekulargewichten einfach herzustellen oder kommerziell erhältlich, und lassen sich mit den erfindungsgemäßen Azoinitiatoren besonders schonend in einer einfachen Additionsmethode ohne Nebenprodukte koppeln.

Die nach dem erfindungsgemäßen Verfahren hergestellten wäßrigen Block-Copolymer-Dispersionen und -Emulsionen zeichnen sich durch einen geringen Gehalt an flüchtigen organischen Lösungsmitteln aus, was ihre Verwendung u.a. für die Herstellung von Lacken, Filmen, Folien, Dispergierhilfsmittel für Lacke und Farben, Verträglichkeitsverbesserer für Polymermischungen und Klebstoffen besonders umweltfreundlich macht.

Mit den eingesetzten Azo-Makro-Initiatoren lassen sich auch Block-Copolymere herstellen, die sich durch anionische Polymerisation nicht herstellen lassen, wie beispielsweise Poly(butadien-b-methylmethacrylat).

Das erfindungsgemäße Verfahren erlaubt die einfache Kupplung von OH- oder NH-terminalen Präpolymeren der unterschiedlichsten Polymerarten mit beliebigen Vinylmonomeren und deren Gemischen.

Die Kopplung des radikalisch zu polymerisierenden Polymerblocks kann in Form der besonders einfachen Emulsionspolymerisation erfolgen, wobei sich das entstandene Block-Copolymer durch bekannte und einfache Verfahren in Masse isolieren und dann durch geeignete Formgebungsverfahren zu Folien, Filmen oder Formkörpern weiterverarbeiten läßt.

Die Erfindung soll nachfolgend an Beispielen erläutert werden.

Beispiel 1

33,3 Gew.-Teile der Lösung eines Azo-Urethan-Initiators wurden zu einer Mischung aus Methylmethacrylat (31,5 Gew.-Teile), Ethylacrylat (45,4 Gew.-Teile), Methacrylsäure (3,1 Gew.-Teile), n-Butanol (20,0 Gew.-Teile) und Methylisobutylketon (66,7 Gew.-Teile) gegeben. Die Lösung wurde gründlich mit Stickstoff belüftet und unter Rühren 20 Stunden auf 98°C bis 103°C erwärmt. Die Umsetzung der Monomere erfolgte zu 100%. Anschließend wurde langsam unter Rühren eine Mischung aus 8,56 Gew.-Teilen Triethylamin und 400 Gew.-Teilen Wasser zugefügt. Nachdem Lösung eingetreten war wurde das Lösungsmittel durch Vakuumdestillation entfernt, wobei eine wäßrige Dispersion erhalten wurde, deren Festkörpergehalt 31,3% betrug.

Beispiel 2

36,7 Gew.-Teile der Lösung eines Azo-Siloxan-Initiators wurden zu einer Mischung aus Methylmethacrylat (42,5 Gew.-Teile), Butylacrylat (35,2 Gew.-Teile), Methacrylsäure (3,1 Gew.-Teile), und MEK (133,0 Gew.-Teile) gegeben. Die Lösung wurde gründlich mit Stickstoff belüftet und unter Rühren 20 Stunden auf 80°C erwärmt. Die Umsetzung der Monomere erfolgte zu 100%. Anschließend wurde langsam unter Rühren eine Mischung aus 3,5 Gew.-Teilen 25%iger wässr. Ammoniaklösung und 420 Gew.-Teilen Wasser zugefügt. Nachdem Lösung eingetreten war wurde das Lösungsmittel durch Vakuumdestillation entfernt, wobei eine wäßrige Dispersion erhalten wurde, deren Festkörpergehalt 20,1% betrug.

Beispiel 3

41,7 Gew.-Teile der Lösung eines Azo-Ester-Initiators wurden zu einer Mischung aus Methylmethacrylat (38,9 Gew.-Teile), Butylacrylat (38,0 Gew.-Teile), Methacrylsäure (3,1 Gew.-Teile), und MEK (128,0 Gew.-Teile) gegeben. Die Lösung wurde gründlich mit Stickstoff belüftet und unter Rühren 20 Stunden auf 80°C erwärmt. Die Umsetzung der Monomere erfolgte zu 100%. Anschließend wurde langsam unter Rühren eine Mischung aus 2,4 Gew.-Teilen 25%iger wss. Ammoniaklösung und 403 Gew.-Teilen Wasser zugefügt. Nachdem Lösung eingetreten war wurde das Lösungsmittel durch Vakuumdestillation entfernt, wobei eine wäßrige Dispersion erhalten wurde, deren Festkörpergehalt 19,1% betrug.

Beispiel 4

Aus einer Azo-Ether-Initiator-Lösung wurde das Lösemittel Methlethylketon (MEK) destillativ im Vakuum abgezogen. 20,0 Gew.-Teile des Festkörpers dieses Azo-Makro-Initiators wurden in einer Mischung aus 41,0 Gew.-Teilen Methylmethacrylat, 37,5 Gew.-Teilen Butylacrylat und 1,5 Gew.-Teilen Methacrylsäure gelöst und die Lösung gründlich mit Stickstoff belüftet. Sie wurde anschließend in einer ebenfalls gut mit Stickstoff belüfteten Emulgatorlösung, zusammengesetzt aus NP 307 (Henkel AG): 5,7 Gew.-Teile (Festkörpergehalt 70%); AES 42 (Henkel AG): 11,4 Gew.-Teile

(Festkörpergehalt 35%); Wasser: 183 Gew.-Teile, unter starkem Rühren emulgiert. Die so erhaltene Präemulsion wurde dann 7 Stunden unter Rühren auf 82°C erhitzt. Der Festkörpergehalt der so erhaltenen Emulsion betrug 30,2%; der Monomerenumsatz lag bei 75%.

Beispiel 5

Aus einer Azo-Ester-Initiator-Lösung wurden die Lösemittel-MEK und 1,4-Dioxan destillativ im Vakuum abgezogen. 30,0 Gew.-Teile des Festkörpers dieses Azo-Makro-Initiators wurden in einer Mischung aus 70,0 Gew.-Teilen Styrol 50 Gew.-Teilen Toluol gelöst. und die Lösung gründlich mit Stickstoff belüftet. Sie wurde anschließend in einer ebenfalls gut mit Stickstoff belüfteten Emulgatorlösung, zusammengesetzt aus NP 407: 5,7 Gew.-Teile (Festkörpergehalt 70%); AES 21: 13,3 Gew.-Teile (Festkörpergehalt 30%); Wasser: 189 Gew.-Teile, unter starkem Rühren emulgiert. Die so erhaltene Präemulsion wurde dann 6 Stunden unter Rühren auf 84°C erhitzt. Der Festkörpergehalt der so erhaltenen Emulsion betrug 22,4%; der Monomerenumsatz lag bei 57%.

Beispiel 6

Aus einer Azo-Ester-Initiator-Lösung des Beispiels 5 wurden MEK und 1,4-Dioxan destillativ im Vakuum abgezogen. 30,0 Gew.-Teile des Festkörpers dieses Azo-Makro-Initiators wurden in einer Mischung aus 70,0 Gew.-Teilen Methylmethacrylat und 50 Gew.-Teilen Toluol gelöst und die Lösung gründlich mit Stickstoff belüftet. Sie wurde anschließend in einer ebenfalls gut mit Stickstoff belüfteten Emulgatorlösung, zusammengesetzt aus NP 407: 5,7 Gew.-Teile (Festkörpergehalt 70%); AES 21: 13,3 Gew.-Teile (Festkörpergehalt 30%); Wasser: 189 Gew.-Teile, unter starkem Rühren emulgiert. Die so erhaltene Präemulsion wurde dann 7 Stunden unter Rühren auf 85°C erhitzt. Der Festkörpergehalt der so erhaltenen Emulsion betrug 29,3%; der Monomerenumsatz lag bei 91%.

**Patentansprüche**

1. Verfahren zur Herstellung wäßriger Block-Copolymer-Emulsionen **dadurch gekennzeichnet**, daß ein Azo-Makro-Initiator, der gemäß den folgenden Stufen A und B hergestellt worden ist,

(A) Herstellung einer Verbindung der allgemeinen Formel I

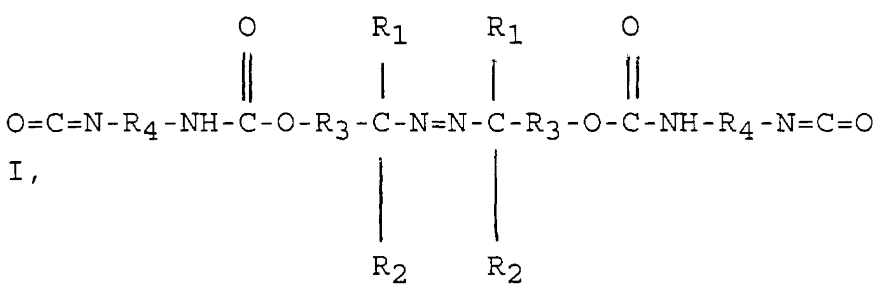

I,

wobei

$R_1$-$CH_3$
$R_2$-CN; -$CH_3$
$R_3$-$CONHCH_2CH_2$; -$(CH_2)_{1-2}$- ;-CONHC(RR')$CH_2$-mit R, R' = -$CH_3$;-$CH_2OH$
und
$R_4$ lineare oder verzweigte aliphatische, cycloaliphatische, aromatische oder araliphatische Reste mit 2-100 Kohlenstoffatomen bedeuten, durch Zugeben eines OH-funktionellen Azoinitiators der allgemeinen Formel II

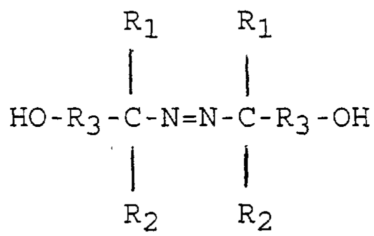 (II),

wobei $R_1$; $R_2$ und $R_3$ die gleichen Bedeutungen wie in Formel I haben, in aromatischen, ketomischen estergruppen - oder stickstffohaltigen lösungsmitteln insbesondere solchen die mit Wasser ein niedrig siedendes Azeotrop bilden , sowie auch in radikalisch polymerisierbaren monomeren zu der Lösung eines Diisocyanates der allgemeinen Formel III

$$O{=}C{=}N{-}R_4{-}N{=}C{=}O \qquad (III),$$

wobei $R_4$ dieselbe Bedeutung wie in Formel I hat,

(B) Umsetzung der Verbindung der Formel I mit einem Präpolymeren mit mindestens zwei isocyanatreaktiven terminalen Gruppen, wobei die Präpolymeren aus der Reihe der Polyurethane, Polyacrylate bzw. -methacrylate, Polyester, Polybutadiene, Aminopropyldimethyl-polydimethylsiloxane, Polydimethylsiloxancarbinole, Polyether, Polyepoxide, Polylactone, Polycarbonate und Polyamide stammen und ihr Molekulargewicht zwischen 400 und 20 000 g/mol liegt, in einem wasser löslichen Lösungsmittel und in geeigneten stöchiometrischen Verhältnissen zueinander bei Temperaturen zwischen 0°C und 60°C, zu einem Azo-Makro-Initiator mit mindestens einer polymerisationsinitiierenden Azogruppe und einem Molekulargewicht zwischen 1500 und 60 000 g/mol, in der Gesamt- oder Teilmenge eines Vinylmonomeren oder eines Vinylmonomerengemisches, unter Umständen mit Hilfe eines wasserunlöslichen Lösungsmittels, gelöst wird, wobei das Gesamtverhältnis von Azo-Makro-Initiator zu Vinylmonomeren zwischen 2:98 und 95:5 Gewichtsteilen liegt und diese Mischung mit Hilfe von weniger als 10 Gewichts-% eines anionischen, kationischen oder nichtionogenen Emulgators oder eines Gemisches verschiedener Emulgatoren und ggf. zusätzlich mittels bekannter Dispergierhilfsmittel in Wasser emulgiert wird und diese Emulsion bei Temperaturen zwischen 65°C und 95°C unter Rühren polymerisiert wird, wobei währenddessen der Rest des bzw. der Vinylmonomeren zugetropft wird, sodaß nach vollständiger Umsetzung der Azogruppen und des Vinylmonomeren eine stabile wäßrige Emulsion eines Block-Copolymeren mit einem Festkörpergehalt zwischen 10 und 80 Gew.-% erhalten wird.

**2.** Verwendung der gemäß Anspruch 1 herstellbaren wäßrigen Block-Copolymer-Emulsionen als Ausgangsstoffe für Beschichtungen.

**3.** Verwendung der gemäß Anspruch 1 herstellbaren wäßrigen Block-Copolymer-Emulsionen zur Herstellung von kaltzähen Filmen und Folien nach an sich bekannten Gießverfahren.

**4.** Verwendung der gemäß Anspruch 1 herstellbaren wäßrigen Block-Copolymer-Emulsionen als Dispergierhilfsmittel für Farben und Lacke.

**5.** Verwendung der gemäß Anspruch 1 herstellbaren Block-Copolymer-Emulsionen zur Herstellung von festen, für weitere Kunststoff-Formgebungsverfahren geeigneten Kunststoffmaterialien nach an sich bekannten Emulsionsspaltverfahren.

**6.** Verwendung der gemäß Anspruch 1 herstellbaren wäßrigen Block-Copolymer-Emulsionen als Ausgangsstoffe zur Herstellung von Klebstoffen.

**7.** Verwendung der gemäß Anspruch 1 herstellbaren wäßrigen Block- Copolymer-Emulsionen als Hilfsmittel zur Verbesserung der Vermischung und Verträglichkeit zweier oder mehrerer verschiedener Polymere.

## Claims

**1.** Method for the preparation of aqueous block-copolymer-emulsions characterised in that an azo-macro-initiator, which has been prepared according to the following stages A and B,

(A) preparation of a compound of the general formula I

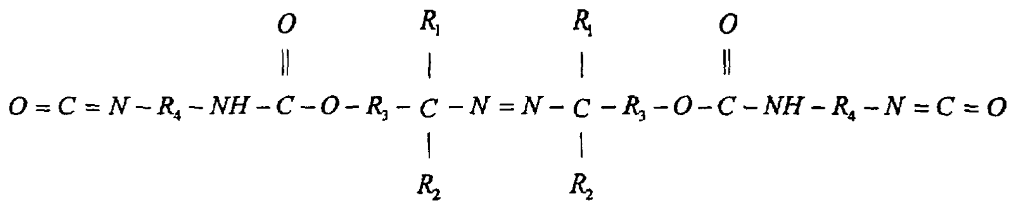

(I)

in which

$R_1$ - CH3
$R_2$ - CN; $-CH_3$
$R_3$ - $CONHCH_2CH_2$ ; - $(CH_2)_{1-2}$-; -CONHC (RR') $CH_2$-with R,R' = - $CH_3$; $-CH_2OH$
and
$R_4$ signifies linear or branched aliphatic, cycloaliphatic, aromatic or araliphatic residues with 2-100 carbon atoms, through the addition of an OH-functional azo initiator of the general formula II

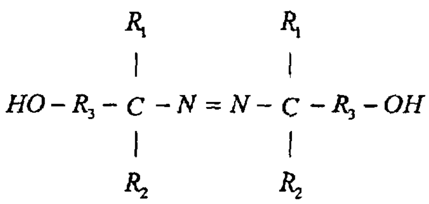

(II)

in which $R_1$; $R_2$ and $R_3$ have the same meanings as in formula I, in aromatic, ketonic, ester group- or nitrogen - containing solvents, more particularly those which form with water a low boiling azeotrope, as well as also in radially polymerisable monomers, to the solution of a diisocyanate of the general formula III

$$O = C = N - R_4 - N = C = O$$

(III) in which $R_4$ has the same meaning as in formula I,

(B) conversion of the compound of formula I with a prepolymer with at least two isocyanate-reactive terminal groups, in which the prepolymers stem from the series of polyurethanes, polyacrylates or -methacrylates, polyesters, polybutadienes, aminopropyldimethylpolydimethylsiloxanes, polydimethylsiloxane carbinols, polyethers, polyoxides, polylactones, polycarbonates and polyamides, and their molecular weight lies between 400 and 20 000 g/mol, in a water-soluble solvent and in suitable stoichiometric ratios to each other at temperatures between 0°C and 60° C, into an azo-macro-initiator with at least one polymerisation-initiating azo group and a molecular weight between 1500 and 60 000 g/mol,

is dissolved in the total or partial amount of a vinyl monomer or a vinyl monomer mixture, under certain circumstances with the aid of a water -insoluble solvent, wherein the overall ratio of azo-macro-initiator to vinyl monomers lies between 2:98 and 95:5 parts by weight, and this mixture is emulsified with the aid of less than 10 parts % of an anionic, cationic or non-ionogenic emulsifier or a mixture of different emulsifiers and where necessary additionally by means of known dispersing agents in water and this emulsion is polymerised at temperatures between 65° C and 95° C with stirring, wherein during this the residue of the or each vinyl monomer is added drop by drop, so that after a complete conversion of the azo groups and of the vinyl monomer a stable aqueous emulsion of a block -copolymer is obtained with a solids content between 10 and 80 parts %.

**2.** Use of the aqueous block-copolymer emulsions which can be prepared according to claim 1 as starting materials for coatings.

**3.** Use of the aqueous block-copolymer-emulsions which can be prepared according to claim 1 for the preparation of cold-viscous films and foils according to the known casting processes.

**4.** Use of the aqueous block-copolymer-emulsions which can be prepared according to claim 1 as dispersing agents for paints and lacquers.

**5.** Use of the block-copolymer emulsions which can be prepared according to claim 1 for the preparation of solid plastics materials suitable for further plastics moulding processes according to the known emulsion splitting process.

**6.** Use of the aqueous block-copolymer emulsions which can be prepared according to claim 1 as starting materials for manufacturing adhesives.

**7.** Use of the aqueous block-copolymer emulsions which can be prepared according to claim 1 as aids for improving the mixing and compatibility of two or more different polymers.

## Revendications

**1.** Procédé de préparation d'émulsions aqueuses de copolymères à blocs, caractérisé en ce que l'on dissout un macroamorceur azoïque, préparé par les étapes A et B ci-dessous:

(A) Préparation d'un composé de formule générale I

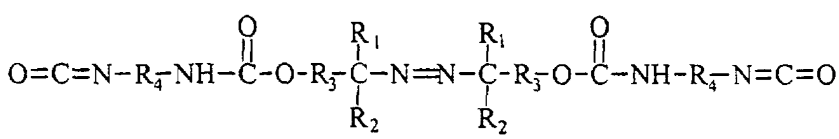

(I)

dans laquelle

$R_1$ est $-CH_3$
$R_2$ est -CN; $-CH_3$
$R_3$ est $-CONHCH_2CH_2-$; $-(CH_2)_{1-2}-$; $-CONHC(RR')CH_2-$ avec R, R' = $-CH_3$; $-CH_2OH$; et
les $R_4$ représentent des restes aliphatiques, cycloaliphatiques, aromatiques ou araliphatiques linéaires ou ramifiés de 2 à 100 atomes de carbone, par addition d'un amorceur azoïque à fonctions OH de formule générale II

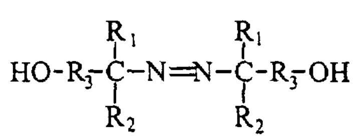

(II)

dans laquelle $R_1$, $R_2$ et $R_3$ ont la même signification que pour la formule I, dans des solvants aromatiques, cétoniques, contenant des groupes ester ou de l'azote, en particulier ceux qui forment un azéotrope de

bas point d'ébullition avec l'eau, ainsi que dans des monomères polymérisables par voie radicalaire, à la solution d'un diisocyanate de formule générale III

$$O=C=N-R_4-N=C=O \quad \text{(III)}$$

dans laquelle $R_4$ a la même signification que pour la formule I,

(B) Réaction du composé de formule I avec un prépolymère ayant au moins deux groupes terminaux réactifs avec les isocyanates, les prépolymères provenant de la série des polyuréthanes, des polyacrylates ou polyméthacrylates, des polyesters, des polybutadiènes, des aminopropyldiméthylpolydiméthylsiloxanes, des polydiméthylsiloxanecarbinols, des polyéthers, des polyépoxydes, des polylactones, des polycarbonates et des polyamides, et leur masse molaire étant comprise entre 400 et 20 000 g/mol, dans un solvant soluble dans l'eau et dans des rapports stoechiométriques mutuels appropriés, à des températures comprises entre 0°C et 60°C, donnant un macroamorceur azoïque ayant au moins un groupe azo amorceur de polymérisation et ayant une masse molaire comprise entre 1 500 et 60 000 g/mol,

dans la quantité totale ou dans une partie d'un monomère vinylique ou d'un mélange de monomères vinyliques, éventuellement à l'aide d'un solvant insoluble dans l'eau, le rapport total du macroamorceur azoïque aux monomères vinyliques étant compris entre 2:98 et 95:5 parties en masse, et on émulsionne ce mélange dans de l'eau à l'aide de moins de 10 % en masse d'un émulsionnant anionique, cationique ou non ionogène ou d'un mélange de différents émulsionnants, et éventuellement aussi à l'aide de dispersants connus, et on polymérise cette émulsion à des températures comprises entre 65 et 95°C en agitant, en ajoutant goutte à goutte pendant ce temps le reste du ou des monomères vinyliques de façon à obtenir, après la fin de la réaction des groupes azoïques et du monomère vinylique, une émulsion aqueuse stable d'un copolymère à blocs ayant une teneur en matière solide comprise entre 10 et 80 % en masse.

**2.** Utilisation des émulsions aqueuses de copolymères à blocs pouvant être préparées selon la revendication 1 comme produits de départ pour des revêtements.

**3.** Utilisation des émulsions aqueuses de copolymères à blocs pouvant être préparées selon la revendication 1 pour la préparation de films et de feuilles tenaces à froid par des procédés de coulée connus en soi.

**4.** Utilisation des émulsions aqueuses de copolymères à blocs pouvant être préparées selon la revendication 1 comme additifs dispersants pour des peintures et des vernis.

**5.** Utilisation des émulsions aqueuses de copolymères à blocs pouvant être préparées selon la revendication 1 pour la préparation de matières plastiques solides appropriées à d'autres procédés de mise en forme de matières plastiques, par des procédés de désémulsion connus en soi.

**6.** Utilisation des émulsions aqueuses de copolymères à blocs pouvant être préparées selon la revendication 1 comme produits de départ pour la préparation de colles.

**7.** Utilisation des émulsions aqueuses de copolymères à blocs pouvant être préparées selon la revendication 1 comme additifs pour l'amélioration du mélange et de la compatibilité de deux ou plusieurs polymères différents.